# EUROPÄISCHE PATENTSCHRIFT

(11) **EP 2 014 396 B1**
(45) Veröffentlichungstag und Bekanntmachung des Hinweises auf die Patenterteilung: **22.09.2010**
(21) Anmeldenummer: 08011037.2
(22) Anmeldetag: 18.06.2008
(51) Int. Cl.: B23B 31/14, B23B 31/20, F16F 1/02

(54) **Fliehkraftunterstütztes Werkzeugspannsystem**
Centrifugal force assisted tool clamping system
Système de serrage d'outil assisté par force centrifuge

(30) Priorität: 21.06.2007 DE 102007029449
(43) Veröffentlichungstag der Anmeldung: 14.01.2009
(73) Patentinhaber: Fischer AG Präzisionsspindeln, 3360 Herzogenbuchsee (CH)
(72) Erfinder: Scholl, Stephan, 3360 Herzogenbuchsee (CH)
(74) Vertreter: Wilming, Martin

(56) Entgegenhaltungen:
- EP-A- 0 271 355
- EP-B- 0 471 808
- DE-A1- 19 751 888
- DE-C1- 4 418 738

## Beschreibung

Die vorliegende Erfindung betrifft ein Werkzeugspannsystem zum Einspannen einer Werkzeuganordnung in eine Spindelwelle gemäß dem Oberbegriff des Anspruchs 1. Ein derartiges Werkzeugspannsystem ist aus der Druckschrift EP 0 271 355 A bekannt.

Bei Werkzeugmaschinen zur Durchführung von spanabhebenden Prozessen, etwa Bohren oder Fräsen, muss ein Werkzeug in Abhängigkeit von den durchzuführenden Arbeitsschritten häufig gewechselt werden. Dazu ist in der Werkzeugspindel ein entsprechendes System vorgesehen, das ein schnelles und einfaches Entfernen eines Werkzeugs und ein Wiedereinspannen eines anderen Werkzeugs ermöglicht.

An derartige Werkzeugspannsysteme werden in der Praxis verschiedene Anforderungen gestellt. Zum einen muss, wie bereits voranstehend erwähnt wurde, der Werkzeugwechsel schnell und einfach, d.h. mit wenigen Handgriffen, ausführbar sein, um Arbeitszeit und Kosten in der Fertigung einzusparen. Des weiteren muss nach dem Werkzeugwechsel eine einmal vorgenommene Justierung eines Werkzeugs erhalten bleiben. Selbstverständlich muss während des Betriebs stets gewährleistet sein, dass das Drehmoment der Spindel über ihren gesamten Drehzahlbereich auf das Werkzeug übertragen wird.

Insbesondere bei kleinen Fräs- bzw. Bohrwerkzeugen ist heutzutage eine große Schnittgeschwindigkeit, d.h. ein schneller Vorschub, gefordert, um diese Arbeitsschritte mit geringem Zeitaufwand durchführen zu können. Um die geforderte hohe Schnittgeschwindigkeit bereitstellen zu können, ohne die Werkzeuge zu hohen Belastungen auszusetzen, müssen sehr hohe Drehzahlen verwendet werden.

Für kleine schnelldrehende Werkzeuge werden häufig konische Spannzangen zum Einspannen des Werkzeugs verwendet. Bei diesen Spannzangen ist jedoch problematisch, dass bei einer Erhöhung der Drehzahl aufgrund der wirkenden Fliehkräfte die Spannkraft der Spannzange verringert wird. Diesem Effekt kann mit einer Erhöhung der Einzugskraft des Werkzeugs in die Spindel gegengewirkt werden, da sich mit einer Erhöhung der Einzugskraft aufgrund der konischen Ausgestaltung der Spannzange auch die Spannkraft, die in radialer Richtung wirkt, erhöht. Eine höhere Einzugskraft kann allerdings nur mit einer Vergrößerung des zur Bereitstellung der Einzugskraft vorgesehen Federpakets bewirkt werden. Das Federpaket besteht dabei in der Regel aus Tellerfedern. Eine Vergrößerung des Federpakets beeinträchtigt jedoch die rotordynamischen Eigenschaften der Welle und führt leicht zu Unwuchten im Spindelsystem.

Aufgrund dieser beiden einander entgegenstehenden Effekte liegt heutzutage die Maximaldrehzahl für ein konventionelles, eine Spannzange verwendendes Werkzeugspannsystem bei etwa 300.000 Umdrehungen pro Minute. Werden höhere Drehzahlen gefordert, muss auf ein anderes Spannkonzept zurückgegriffen werden. Um den Fliehkrafteffekt zu verringern, sind im Stand der Technik sog. fliehkraftunterstützte Werkzeugspannsysteme bekannt.

Die Druckschrift US 3 625 528 zeigt ein solches fliehkraftunterstütztes Werkzeugspannsystem. Bei diesem Werkzeugspannsystem wird der Schaft eines Werkzeugs in eine konische Spannzange eingeführt und durch Eindrehen einer Schraube in das Spindelgehäuse, die die Spannzange gegen den Werkzeugschaft drückt, vorgespannt, so dass der Schaft nicht aus der Spannzange herausfällt. Das Werkzeugspannsystem des Standes der Technik weist Blockelemente auf, die an Schrägen anliegen. Bei einer Rotation der Spindel werden die Blockelemente durch die wirkenden Fliehkräfte nach außen bewegt und gleiten entlang den Schrägen in Richtung des Spindelinnenraums. Die wirkende Fliehkraft wird so zum Teil in eine Einzugskraft umgelenkt. Aufgrund der konischen Form der Spannzange wird die axiale Einzugskraft wiederum an dem Werkzeugschaft radial nach innen gelenkt, so dass mittels des ermöglichten Kraftflusses die Fliehkraft letztendlich zumindest teilweise radial nach innen auf den Werkzeugschaft wirkt und so die Einspannkraft erhöht.

Diese bekannten Werkzeugspannsysteme bestehen jedoch aus vielen Einzelteilen und weisen somit eine Anfälligkeit für rotordynamische Störungen bzw. Unwuchten auf. Des weiteren wird ein Werkzeug benötigt, um eine Vorspannschraube zu drehen und die Vorspannkraft zu bewirken bzw. aufzuheben. Ein Werkzeugwechsel ist somit nur mit Hilfe eines zusätzlichen Werkzeugs, etwa eines Schraubenziehers, möglich.

Des weiteren bewirken die bekannten Vorspannsysteme, bei denen von außen mittels Schrauben die Spannzange zusammengedrückt wird, dass sich die Spannzange nicht nur zusammendrückt, sondern in ihrem konischen Abschnitt evtl. leicht von ihrer gegenüberliegenden Anlagefläche löst. Beim Starten der Spindel muss somit erst eine gewisse Drehzahl erreicht werden, um eine ausreichende Fliehkraft bereitzustellen, die einen so großen Einzug des Werkzeugs bewirkt, dass die konischen Flächen wieder zur Anlage kommen und sich die Spannkraft erhöhen kann. Bei diesen geringen Drehzahlen wirkt der Fliehkrafteffekt dann aber ungehindert der Vorspannkraft entgegen, so dass sich der Werkzeugschaft evtl. wieder löst.

Es besteht somit ein Bedarf an einem Werkzeugspannsystem, das bei hohen Drehzahlen einsetzbar ist, bei jeder Drehzahl eine ausreichende Spannkraft bereitstellt, eine hohe Wuchtgüte aufweist und einen einfachen und schnellen Werkzeugwechsel ermöglicht.

Erfindungsgemäß wird daher ein Werkzeugspannsystem mit den Merkmalen des Anspruchs 1 bereitgestellt.

Das erfindungsgemäße Werkzeugspannsystem zum Einspannen einer Werkzeuganordnung in eine Spindelwelle umfasst einen Innenkegel, einen Federkörper, der axial abgestützt ist, eine mit einem konischen aufgeweiteten Ende an dem Innenkegel anliegende und mit dem Federkörper axial gekoppelte Spannzange, mehrere Fliehkraftelemente, die jeweils so an einer entsprechenden Schräge gelagert sind, dass eine aufgrund einer Rotation der Spindelwelle radial nach außen auf die Fliehkraftelemente wirkende Kraft axial auf den Federkörper und über die Spannzange radial nach innen auf die Werkzeuganordnung wirkt, wobei der Federkörper einen axial wirkenden vorspannbaren Federabschnitt aufweist, um eine über die Spannzange radial nach innen auf die Werkzeuganordnung wirkende Vorspannkraft bereitzustellen.

Die Begriffe "axial" und "radial" beziehen sich dabei auf die Rotationsachse der Spindelwelle, so dass unter "axial" eine Richtung parallel zu der Rotationsachse der Spindelwelle und unter "radial" eine Richtung senkrecht zu der Rotationsachse der Spindelwelle zu verstehen ist.

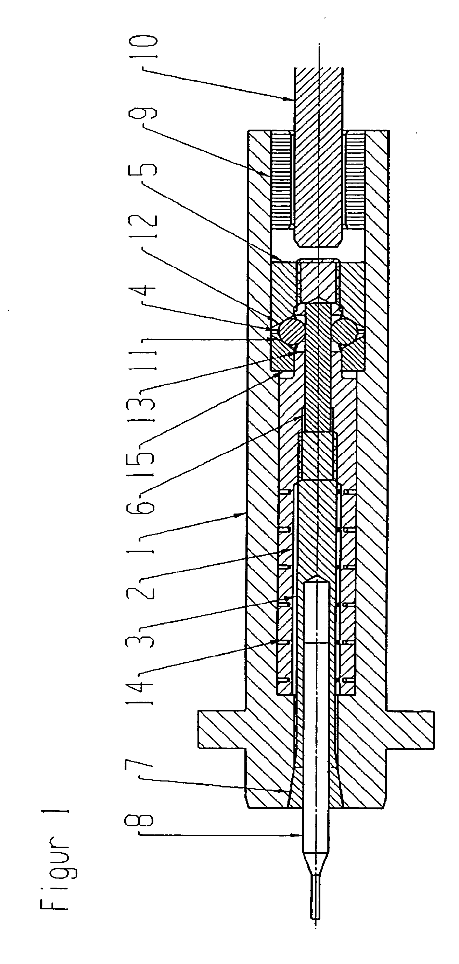

Die in dieser Beschreibung verwendeten Richtungsangaben "in Richtung der Werkzeugordnung" und "in Richtung des Spindeläußeren" weisen im Beispiel der Figur 1 nach links, die Richtungsangabe "in Richtung des Spindelinneren" weist entsprechend im Beispiel der Figur 1 nach rechts.

Des weiteren soll verstanden werden, dass der Federabschnitt Teil des Federkörpers ist, d.h. der Federabschnitt ist durch entsprechende Formgebung und Materialauswahl des Federkörpers gebildet und mit dem Federkörper einstückig.

Mittels der Fliehkraftelemente wird erreicht, dass bei einer Erhöhung der Drehzahl der Spindelwelle die auf die Fliehkraftelemente radial nach außen wirkenden Kräfte (Zentrifugalkräfte bzw. Fliehkräfte) zumindest teilweise in axiale Richtung umgelenkt werden und auf den Federkörper wirken. Da der Federkörper mit der Spannzange axial gekoppelt ist, übertragen sich diese Kräfte in axialer Richtung auch auf die Spannzange und erhöhen die Einzugskraft. Da die Spannzange wiederum mit ihrem konisch aufgeweiteten Ende an dem Innenkegel anliegt, werden diese axialen Kräfte zumindest teilweise radial nach innen gelenkt und erhöhen so die Spannkraft. Mit einer Erhöhung der Drehzahl der Spindelwelle erhöht sich somit auch stets die Spannkraft der Spannzange und stellt die sichere Einspannung der Werkzeuganordnung sicher.

Der Federkörper weist erfindungsgemäß einen Federabschnitt auf, wobei der Federkörper axial abgestützt ist, um ein axial festes Widerlager zum Eindrücken bzw. Ausdehnen des Federabschnitts bereitzustellen.

In einer Ausführungsform kann dabei vorgesehen sein, dass der Federkörper mit seinem Federabschnitt an der Spindelwelle anliegt.

Mittels des Federabschnitts ist eine Voreinspannung der Werkzeuganordnung in dem Werkzeugspannsystem möglich. Die Voreinspannkraft hält die Werkzeuganordnung bei stillstehender Spindelwelle in dem Werkzeugspannsystem. Der axial wirkende Federabschnitt des Federkörpers wirkt erfindungsgemäß in axialer Richtung. Die Federkraft wirkt somit parallel und gleichgerichtet zu dem axialen Kraftfluss der umgeleiteten Zentrifugalkräfte. Des weiteren liegt die Spannzange mit ihrem konisch aufgeweiteten Ende fest an dem Innenkegel an. Auf diese Weise ist sichergestellt, dass zu jedem Zeitpunkt mindestens die Vorspannkraft radial nach innen auf die Werkzeuganordnung wirkt, so dass die Werkzeuganordnung nie aus dem Werkzeugspannsystem fallen kann.

Da der Federabschnitt Teil des Federkörpers ist, ist kein separates Federpaket vorzusehen, das eine entsprechend hohe Einzugskraft bereitstellt. Auf diese Weise wird eine hohe Wuchtgüte des Werkzeugspannsystems erreicht. Zudem ist gegenüber dem Stand der Technik die Anzahl von Einzelteilen deutlich vermindert, was ebenfalls zu einer Erhöhung der Wuchtgüte beiträgt.

Durch die Verwendung des Federkörpers mit dem Federabschnitt ist es des weiteren nicht mehr nötig, eine Vorspannkraft mittels eindrehbarer Schrauben oder ähnlichem bereitzustellen. Ein Werkzeugwechsel kann somit ohne zusätzliche andere Werkzeuge, etwa Schraubenzieher, durchgeführt werden.

In einer Ausführungsform kann vorgesehen sein, dass die Fliehkraftelemente rotationssymmetrisch angeordnete Kugeln sind. Wie nachstehend noch erläutert wird, eignen sich Kugeln besonders gut als Fliehkraftelemente, da mit ihnen der Zusammenbau des Werkzeugspannsystems einfach gestaltet werden kann.

In einer Ausführungsform der Erfindung weist der Federkörper Aussparungen auf, die die Fliehkraftelemente in Umfangsrichtung stützen.

Durch das Lagern der Fliehkraftelemente bzw. Kugeln in Aussparungen in dem Federkörper als auch an der Schräge, wobei die Schräge in einem fest mit der Spindelwelle verbundenen Einsatz ausgebildet sein kann, wird der Federkörper in Umfangsrichtung gegenüber der Spindelwelle fixiert und somit verdrehsicher gelagert.

Es kann ein elastischer Köper in dem Federkörper angeordnet sein, der die Fliehkraftelemente radial innen stützt.

Mittels des elastischen Körpers wird verhindert, dass die Fliehkraftelemente bzw. Kugeln nach innen fallen können. Des weiteren sind die Kugeln mittels des elastischen Elements radial innen elastisch gelagert, so dass sie um ein gewisses Maß radial nach innen gedrückt werden können, was, wie nachstehend noch erläutert wird, zu einem einfachen Werkzeugwechsel beiträgt.

In einer Ausführungsform ist vorgesehen, dass die Spannzange mit dem Federkörper verschraubt ist, um eine axiale Kopplung der Spannzange mit dem Federkörper bereitzustellen.

Mittels der Verschraubung wird auf einfache Weise eine axiale Kopplung zwischen der Spannzange und dem Federkörper bereitgestellt. Zudem lässt sich mittels der Verschraubung die axiale Position des Federkörpers relativ zu der Spannzange einstellen. Durch die Schraubbewegung wird so der Federabschnitt des Federkörpers vorgespannt. Auf diese Weise ist die Vorspannung auf besonders einfache Weise stufenlos einstellbar.

Es kann vorgesehen sein, dass ein Druckstück mit dem Federkörper axial gekoppelt ist, das mit einer Druckfläche jeweils an einem einer entsprechenden Schräge an dem entgegengesetzten Ende der Fliehkraftelemente anliegt. Es kann selbstverständlich vorgesehen sein, dass die axiale Kopplung des Druckstücks mit dem Federkörper mittels einer Verschraubung bereitgestellt ist.

Mittels des Druckstücks, das auf das werkzeugferne Ende des Federkörpers aufgeschraubt sein kann, wird die Kugel auf der der Schräge gegenüberliegenden Seite an der Druckfläche des Druckstücks spielfrei gelagert. Es kann vorgesehen sein, dass die Druckfläche so abgeschrägt ist, dass das radiale äußere Ende der Druckfläche der entsprechenden Schräge zugeneigt ist.

Indem die Schräge und die Druckfläche mit ihren radial äußeren Enden aufeinander zugeneigt wird, wird im Querschnitt ein imaginäres V gebildet, wobei der Schnittpunkt der Schenkel des V radial außen liegt.

Auf diese Weise kann bewirkt werden, dass eine radiale Verschiebung der Kugel aufgrund von Fliehkräften eine Verschiebung auf den Federkörper und somit auch auf die Spannzange in axialer Richtung bewirkt. Dieser Hub bzw. Kraftverhältnis kann durch den Neigungswinkel sowohl der Schräge als auch der Druckfläche eingestellt werden. Zur Einstellung der axialen Kraft können des weiteren die Anzahl der Kugeln bzw. Fliehkraftelemente, die Masse der Fliehkraftelemente, der Abstand der Fliehkraftelemente von der Rotationsachse und der Kugeldurchmesser variiert werden.

Durch ein Drücken des Druckstücks in axialer Richtung kann somit durch die Neigung der Schräge und der Druckfläche ein Verschieben der Fliehkraftelemente bzw. der Kugeln radial nach innen in das elastische Element bewirkt werden, wodurch ein einfacher Werkzeugwechsel ermöglicht wird, wie nachstehend noch genauer erläutert ist.

Es kann des weiteren vorgesehen sein, dass eine Wechselvorrichtung bereitgestellt ist, die das Ausüben eines Drucks auf den Federkörper oder das Druckstück axial in Richtung der Werkzeuganordnung ermöglicht.

Mittels der Wechselvorrichtung kann somit der Federkörper in Richtung der Werkzeuganordnung bzw. in Richtung des Spindeläußeren bewegt werden. Durch die Schräge und die Druckfläche des Druckstücks werden die Fliehkraftelemente bzw. die Kugeln um ein gewisses Maß in das elastische Element gedrückt, so dass ein gewisses Maß an axialer Bewegung in Richtung der Werkzeuganordnung möglich ist. Dabei wird der Federabschnitt des Federkörpers zusammengedrückt und die durch den Federabschnitt in axialer Richtung ausgeübte Vorspannkraft aufgehoben. Es wirkt dann auch keine Kraft mehr radial nach innen auf die Werkzeuganordnung, dass diese einfach aus der Spannzange herausgezogen werden kann.

Selbstverständlich kann vorgesehen sein, dass das Werkzeugspannsystem so konfiguriert ist, dass der Federkörper mittels der Wechselvorrichtung nicht nur so weit bewegt werden kann, dass die Vorspannkraft des Federabschnitts aufgehoben wird, sondern auch über diesen Punkt hinaus eine axiale Bewegung in Richtung der Werkzeuganordnung stattfinden kann. In diesem Fall würde der konisch aufgeweitete Abschnitt der Spannzange sich von dem Innenkegel lösen und etwas aus der Spindelwelle hervortreten. Auf diese Weise wäre ein optischer Indikator dafür vorgesehen, dass die Werkzeuganordnung aus der Spannzange gezogen werden kann. Je nach Auslegung der Passung der Werkzeuganordnung in der Spannzange kann die Werkzeuganordnung mit leichtem Kraftaufwand herausgezogen werden oder fällt von selbst aus der Spannzange.

Es kann vorgesehen sein, dass der Federkörper in Umfangsrichtung verlaufende Nuten aufweist, um den Federabschnitt bereitzustellen.

In einer weiteren Ausführungsform kann vorgesehen sein, dass der Federkörper teilweise einen wellenförmigen Querschnitt aufweist, um einen Federabschnitt bereitzustellen.

Darüber hinaus sind beliebige weitere Formgebungen denkbar, die eine axiale Elastizität bereitstellen.

Mit den beiden voranstehend beschriebenen Möglichkeiten ist es auf besonders einfache Weise möglich, den Federabschnitt in dem Federkörper bereitzustellen. Der Federkörper erhält so im Bereich des Federabschnitts eine gewisse Elastizität in axialer Richtung und ist somit in der Lage, ein gewisses Maß an Federenergie zu speichern.

Es kann vorgesehen sein, dass die Spannzange axial geschlitzt ist, um eine Elastizität der Spannzange in radialer Richtung bereitzustellen.

Auf diese Weise wird sichergestellt, dass die Spannzange in einem ausreichenden Maß an ihrem konisch aufgeweiteten Ende in radialer Richtung bewegbar ist, ohne dass Schäden an der Spannzange entstehen.

Es kann vorgesehen sein, dass der Innenkegel einstückig mit der Spindelwelle ausgebildet ist und die Schrägen an einem fest mit der Spindelwelle verbundenen Einsatz ausgebildet sind.

Alternativ kann auch vorgesehen sein, den Innenkegel als Einsatz auszubilden und die Schrägen direkt an der Spindelwelle auszubilden. Es kann vorgesehen sein, dass eine entsprechende Schräge durch Bohrungen bzw. Fräsungen in dem Einsatz bzw. der Spindelwelle gebildet wird, die symmetrisch über den Umfang verteilt sind. Die Anzahl der Bohrungen entspricht den Kugeln, die verbaut sind. Der Durchmesser einer Bohrung entspricht mindestens einem jeweiligen Durchmesser einer entsprechenden Kugel.

Weitere Vorteile und Ausgestaltungen der Erfindung ergeben sich aus der Beschreibung und der beiliegenden Zeichnung.

Die Erfindung ist anhand eines Ausführungsbeispieles in der Zeichnung schematisch dargestellt und wird im folgenden unter Bezugnahme auf die Zeichnung ausführlich beschrieben.
- Figur 1: zeigt eine Querschnittsansicht einer ersten Ausführungsform eines erfindungsgemäßen Werkzeugspannsystems.
- Figur 2: zeigt eine Querschnittsansicht einer zweiten Ausführungsform eines erfindungsgemäßen Werkzeugspannsystems.

Figur 1 zeigt eine Querschnittansicht eines erfindungsgemäßen Werkzeugspannsystems, wie es in der Praxis zum Einsatz kommen kann.

Das Werkzeugspannsystem dient zum Einspannen einer Werkzeuganordnung 8 in eine Spindelwelle 1. Die Spindelwelle 1 ist durch einen Elektrorotor 9 angetrieben, selbstverständlich kann auch jede andere geeignete Antriebsart verwendet werden.

Um den Aufbau des Werkzeugspannsystems zu beschreiben, ist nachfolgend zunächst erläutert, wie das Werkzeugspannsystem in der Spindelwelle 1 montiert wird.

Zunächst wird in die Spindelwelle 1 der Federkörper 2 eingeschoben, so dass der Federabschnitt 14 an der Spindelwelle zum Anliegen kommt.

Darauffolgend wird ein elastisches Element 6 in den Federkörper 2 eingeschoben. Nun wird eine Werkzeuganordnung 8 in eine Spannzange 3 eingesetzt und das aus der Spannzange 3 und der Werkzeuganordnung 8 bestehende Paket in den Federkörper 2 geschoben und mit diesem verschraubt.

Durch die Verschraubung der Spannzange 3 mit dem Federkörper 2 gelangt zunächst eine konische Erweiterung der Spannzange 3 in Anlage mit dem Innenkegel 7. Wenn der Einschraubvorgang nun fortgesetzt wird, wird der Federabschnitt 14 des Federkörpers 2 gespannt und eine Einzugskraft durch den Federabschnitt 14 bereitgestellt. Beendet man nun den Einschraubvorgang, wird die bisher eingebaute Anordnung von dem Federabschnitt 14 des Federkörpers 2 in axialer Richtung gespannt, da der Federabschnitt 14 des Federkörpers 2 sich fest an der Spindelwelle 1 abstützt. Das konisch aufgeweitete Ende der Spannzange 3 wird gegen den Innenkegel 7 gepresst und aufgrund der Schräge des Innenkegel 7 bzw. des Konus der Spannzange 3 wirkt eine radial nach innen gerichtete Kraft über die Spannzange 3 auf die Werkzeuganordnung 8, so dass diese fest in der Spannzange 3 eingespannt ist.

Die Höhe dieser Vorspannkraft kann dabei entweder durch das Maß eingestellt, in dem die Spannzange 3 in den Federkörper 2 eingeschraubt wird, und/oder bei der Auslegung durch den Winkel der Schräge des Innenkegel 7 bzw. des Konus der Spannzange 3 gegenüber der Rotationsachse der Spindelwelle 1.

Die Werkzeuganordnung 8 ist nun bereits in dem Werkzeugspannsystem eingespannt. Die so erreichte Lage des Werkzeugspannsystems kann auch als Null-Lage bezeichnet werden.

In dieser Null-Lage wirkt lediglich eine durch den Federabschnitt 14 ausgeübte Kraft in axialer Richtung, die zumindest teilweise über den Innenkegel 7 und das konische Ende der Spannzange radial nach innen auf die Werkzeuganordnung gerichtet ist.

Des weiteren ist ein fest mit der Spindelwelle 1 verbundener Einsatz 15 vorgesehen. In dem Einsatz 15 sind eine Anzahl symmetrischer schräger Bohrungen in Umfangsrichtung vorgesehen. Diese Bohrungen bilden die Schräge 11 für die Fliehkraftelemente bzw. Kugeln 4. In jede dieser Bohrungen wird nun eine Kugel 4 durch die von der Werkzeuganordnung abgewandte Seite eingeführt, bis sie auf dem elastischen Element 6 in einer Aussparung 13 des Federkörpers 2 zu liegen kommt . Nun wird auf das werkzeugferne Ende des Federkörpers 2 ein Druckstück 5 aufgeschraubt, bis die Druckfläche 12 des Druckstücks 5 an den Kugeln 4 zur Anlage kommt. Geeignete Hilfsmittel, wie etwa Schraubzangen, zum Einschrauben des Druckstücks 5 auf den Federkörper 2 sind dem Fachmann bekannt.

Letztlich wird ein Rotor 9 des Elektromotors und eine Wechselvorrichtung 10 montiert.

Das Werkzeugspannsystem ist nun zusammengebaut und betriebsbereit.

Selbstverständlich kann auch vorgesehen sein, die Spannzange 3 zunächst ohne eine in der Spannzange 3 befindliche Werkzeuganordnung 8 in den Federkörper 2 einzuschrauben. Generell bietet das Einschrauben der Spannzange 3 mit einer in der Spannzange 3 befindlichen Werkzeuganordnung 8 jedoch den Vorteil, dass die Vorspannkraft bereits während der Montage justiert werden kann. Ist das Maß, um das die Spannzange 3 in den Federkörper 2 einschraubt werden muss bereits bekannt, kann die Montage der Spannzange 3 jedoch auch problemlos ohne die Werkzeuganordnung 8 erfolgen.

Wird im Betrieb nun die Spindelwelle 1 in Rotation versetzt, erhöhen sich die auf die Kugeln 4 wirkenden Zentrifugalkräfte. Die Kugeln 4 werden jeweils radial nach außen bewegt und gleiten entlang der Schrägen 11 und der Druckfläche 12 nicht nur radial nach außen, sondern zusätzlich in Abhängigkeit von der Winkelstellung der Schräge 11 auch in axiale Richtung. Dadurch wirken sie auf die Druckfläche 12 des Druckstücks 5, das so ebenfalls in axialer Richtung in das Spindelinnere gedrückt wird. Aufgrund der Verschraubung des Druckstücks 5 mit dem Federkörper 2, die als axiale Kopplung dient, wird auch der Federkörper 2 in axialer Richtung in das Spindelinnere gedrückt.

Dabei ist zu beachten, dass die Aussparungen 13 des Federkörpers 2 so ausgelegt sind, dass sie lediglich in Umfangsrichtung mit den Kugeln 4 zur Anlage kommen können, um den Federkörper 2 lediglich gegen eine Verdrehung im Spindelinneren zu sichern.

Der Federkörper 2 wiederum ist mit der Spannzange 3 verschraubt, so dass sich die axiale Bewegung des Federkörpers 2 auf die Spannzange 3 überträgt. Die Spannzange 3 liegt mit ihrem konisch aufgeweiteten Ende jedoch an dem Innenkegel 7 an, so dass dort eine radial nach innen gerichtete Kraft wirkt und die Spannzange 3 gegen die Werkzeuganordnung 8 presst, so dass sich die Kraft, mit der die Werkzeuganordnung 8 durch die Spannzange 3 eingespannt ist, erhöht.

An dieser Stelle soll angemerkt werden, dass die voranstehend verwendete Beschreibung einer Bewegung der einzelnen Bauteile verwendet wurde, um den Kraftfluss in dem Werkzeugspannsystem zu verdeutlichen. Wenn das konisch aufgeweitete Ende der Spannzange 3 sich bereits in Anlage mit dem Innenkegel 7 befindet, ist in der Regel keine axiale Bewegung der Spannzange 3, des Federkörpers 2, des Druckstücks 5 oder der Kugeln 4 in axialer Richtung in das Spindelinnere (d.h. in Figur 1 nach rechts) möglich. In diesem Fall wirken dann jedoch weiterhin die entsprechenden Kräfte an den jeweiligen Verbindungsstellen in die beschriebenen Richtungen.

Auf diese Weise wird durch das Werkzeugspannsystem sichergestellt, dass die Einspannkraft, die auf die Werkzeuganordnung 8 wirkt, trotz einer Drehzahlerhöhung nicht abnimmt. Des weiteren wirken die durch die Kugeln 4 auf den Federkörper 2 übertragenen Kräfte in axialer Richtung in dieselbe Richtung (in Richtung des Spindelinneren) wie die axialen Vorspannkräfte des Federabschnitts 14. Auf diese Weise ist sichergestellt, dass die auf die Werkzeuganordnung 8 wirkende radial nach innen gerichtete Vorspannkraft nicht unterschritten wird. Des weiteren befindet sich das konisch aufgeweitete Ende der Spannzange 3 stets in Anlage mit dem Innenkegel 7.

Aufgrund der wenigen vorhandenen Bauteile und die formschlüssigen Schraubverbindungen, die das Verwenden zusätzlicher kleiner Befestigungselemente, wie etwa Schrauben oder Bolzen, unnötig machen, besitzt das erfindungsgemäße Werkzeugspannsystem eine hohe Wuchtgüte und weist auch bei hohen Drehzahlen gute dynamische Eigenschaften auf.

Muss während des Betriebs der Spindel die Werkzeuganordnung 8 gewechselt werden, wird zunächst die Rotation der Spindelwelle 1 gestoppt. Auf die Kugeln 4 wirken nun keine Zentrifugalkräfte mehr und das Werkzeugspannsystem kehrt in seine Null-Lage zurück. Es wirken nun lediglich die durch den Federabschnitt 14 bewirkten Vorspannkräfte auf die Werkzeuganordnung 8.

Mittels einer Wechselvorrichtung 10 wird nun ein Druck in axialer Richtung auf den Federkörper 2 in Richtung der Werkzeuganordnung 8 ausgeübt. Die Druckfläche 12 des Druckstücks 5 ist so geneigt, dass zusammen mit der Schräge 11 bewirkt wird, dass die Kugeln 14 um ein gewisses Maß in den elastischen Körper 6 hineingedrückt werden. Auf diese Weise kann der gesamte Federkörper um ein gewisses Maß axial in Richtung des Spindeläußeren (d.h. in Figur 1 nach links) bewegt werden. Die durch den Federabschnitt 14 bewirkten Vorspannkräfte werden so aufgehoben. Es kann vorgesehen sein, dass sich dann das konische Ende der Spannzange 3 von dem Innenkegel 7 löst.

Es wirken nun keine radialen Kräfte mehr auf die Werkzeuganordnung 8 und diese kann einfach ausgetauscht werden.

Ist eine neue Werkzeuganordnung 8 in die Spannzange 3 eingesetzt und wird kein Druck mehr mittels der Wechselvorrichtung 10 auf den Federkörper 2 ausgeübt, bewirkt der Federabschnitt 14, dass das Werkzeugspannsystem in seine Null-Lage zurückbewegt wird und die Werkzeuganordnung 8 ist in der Spannzange 3 durch die Vorspannkraft eingespannt.

Auf diese Weise wird mittels eines einfachen Drucksystems ein Wechseln der Werkzeuganordnung 8 ermöglicht. Es sind keinerlei Hilfsmittel bzw. Werkzeuge, wie etwa Schraubenzieher, nötig, um die Werkzeuganordnung 8 zu wechseln. Die Justierung und Auswuchtung der Spindel bleibt auch nach dem Einsetzen einer neuen Werkzeuganordnung 8 erhalten.

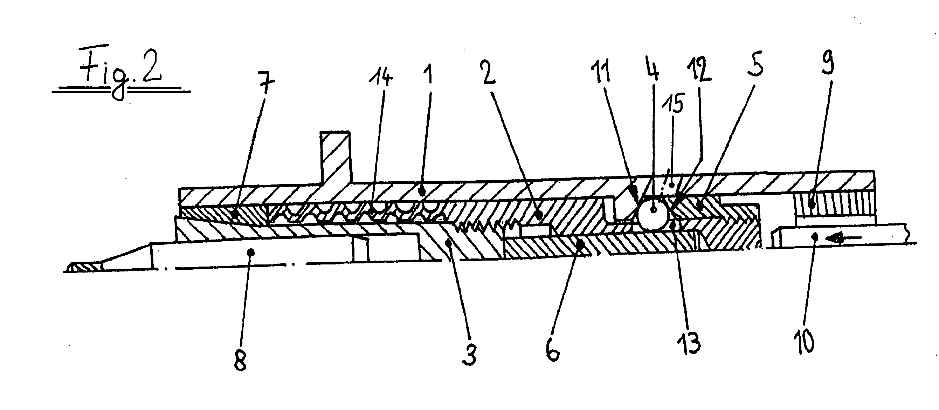

Figur 2 zeigt eine zweite Ausführungsform des erfindungsgemäßen Werkzeugspannsystems.

Im Gegensatz zu der in Figur 1 dargestellten Ausführungsform ist der Innenkegel 7 als Einsatz ausgebildet und geeignet mit der Spindelwelle 1 verbunden. Die Schrägen 11 wiederum sind einstückig direkt an der Spindelwelle 1 ausgebildet.

Beim Einbau ist der Federkörper 2 nunmehr von der Werkzeugseite her einzuführen und darauffolgend der Innenkegel 7 mit der Spindelwelle 1 zu verbinden. Der übrige Zusammenbau und der Betrieb erfolgt wie bei der in Figur 1 dargestellten Ausführungsform oder ergibt sich für den Fachmann in naheliegender Weise.

Durch das voranstehend beschriebene erfindungsgemäße Werkzeugspannsystem wird eine hohe Wuchtgüte erreicht. Ein Wechseln einer Werkzeuganordnung 8 ist einfach und ohne Hilfsmittel möglich. Des weiteren wird eine sichere Vorspannkraft bereitgestellt, die bei jeder Drehzahl mindestens auf die Werkzeuganordnung 8 wirkt, so dass die Werkzeuganordnung 8 stets sicher eingespannt ist. Bei hohen Drehzahlen bleibt die Werkzeuganordnung 8 durch die fliehkraftunterstützte Einspannung stets sicher befestigt, so dass das Spindelmoment vollständig auf die Werkzeuganordnung 8 übertragen wird. Aufgrund der geringen Anzahl von Bauelementen bleibt die Wuchtgüte des Systems auch bei höchsten Drehzahlen erhalten.

## Patentansprüche

1. Werkzeugspannsystem zum Einspannen einer Werkzeuganordnung (8) in eine Spindelwelle (1), mit:
- einem Innenkegel (7),
- einem Federkörper (2), der axial abgestützt ist,
- einer mit einem konisch aufgeweiteten Ende an dem Innenkegel (7) anliegenden und mit dem Federkörper (2) axial gekoppelten Spannzange (3),
wobei der Federkörper (2) einen axial wirkenden vorspannba- ren Federabschnitt (14) aufweist, um eine über die Spannzange (3) radial nach innen auf die Werkzeuganordnung wirkende Vorspannkraft bereitzustellen.
**gekennzeichnet durch**:
- mehreren Fliehkraftelementen (4), die jeweils so an einer entsprechenden Schräge (11) gelagert sind, dass eine aufgrund einer Rotation der Spindelwelle (1) radial nach außen auf die Fliehkraftelemente (4) wirkende Kraft axial auf den Federkörper (2) und über die Spannzange (3) radial nach innen auf die Werkzeuganordnung (8) wirkt,

2. Werkzeugspannsystem nach Anspruch 1, bei dem die Fliehkraftelemente rotationssymmetrisch angeordnete Kugeln (4) sind.

3. Werkzeugspannsystem nach Anspruch 1 oder 2, bei dem der Federkörper (2) Aussparungen aufweist, die die Fliehkraftelemente (4) in Umfangsrichtung stützen.

4. Werkzeugspannsystem nach einem der Ansprüche 1 bis 3, bei dem ein elastischer Körper (6) in dem Federkörper (2) angeordnet ist, der die Fliehkraftelemente (4) radial innen stützt.

5. Werkzeugspannsystem nach einem der Ansprüche 1 bis 4, bei dem die Spannzange (3) mit dem Federkörper (2) verschraubt ist, um eine axiale Kopplung bereitzustellen.

6. Werkzeugspannsystem nach einem der Ansprüche 1 bis 5, bei dem ein Druckstück (5) mit dem Federkörper (2) axial gekoppelt ist, dass mit einer Druckfläche (12) jeweils an einem einer entsprechenden Schräge (11) entgegengesetzten Ende der Fliehkraftelemente (4) anliegt.

7. Werkzeugspannsystem nach Anspruch 6, bei dem die Druckfläche (12) so abgeschrägt ist, dass das radial äußere Ende der Druckfläche (12) der entsprechenden Schräge (11) zugeneigt ist.

8. Werkzeugspannsystem nach einem der Ansprüche 1 bis 7, bei dem eine Wechselvorrichtung (10) bereitgestellt ist, die das Ausüben eines Drucks auf den Federkörper (2) oder das Druckstück (5) axial in Richtung der Werkzeuganordnung (8) ermöglicht.

9. Werkzeugspannsystem nach einem der Ansprüche 1 bis 8, bei dem der Federkörper (2) in Umfangsrichtung verlaufende Nuten aufweist, um einen Federabschnitt (14) bereitzustellen.

10. Werkzeugspannsystem nach einem der Ansprüche 1 bis 9, bei dem die Spannzange (3) axial geschlitzt ist, um eine Elastizität der Spannzange (3) in radialer Richtung bereitzustellen.

11. Werkzeugspannsystem nach einem der voranstehenden Ansprüche; bei dem der Innenkegel (7) einstückig mit der Spindelwelle (1) ausgebildet ist und die Schrägen (11) an einem fest mit der Spindelwelle (1) verbundenen Einsatz (15) ausgebildet sind.

12. Werkzeugspannsystem nach einem der Ansprüche 1 bis 10, bei dem der Innenkegel (7) fest mit der Spindelwelle (1) verbunden ist und die Schrägen (11) direkt in der Spindelwelle (1), bspw. mittels Bohrungen oder Fräsungen, ausgebildet sind.

13. Werkzeugspannsystem nach Anspruch 11, bei dem eine entsprechende Schräge (11) als Bohrung in dem Einsatz (15) ausgebildet ist, wobei ein Durchmesser der Bohrung mindestens einem jeweiligen Durchmesser der Kugeln (4) entspricht, so dass zusammen mit den Aussparungen (13) eine Verdrehsicherung für den Federkörper (2) bereitgestellt ist.

## Claims

1. Tool-chucking system for chucking a tool arrangement (8) into a spindle shaft (1), with:
- an inner cone (7)
- a spring body (2) which is supported axially,
- a collet (3) bearing with a conically widened end against the inner cone (7) and coupled axially to the spring body (2),
the spring body (2) having an axially acting prestressable spring portion (14), in order to provide a prestressing force acting radially inwards upon the tool arrangement via the collet (3),
**characterized by**:
- a plurality of centrifugal elements (4) which are in each case mounted on a corresponding slope (11) such that a force acting radially outwards upon the centrifugal elements (4) on account of a rotation of a spindle shaft (1) acts axially upon the spring body (2) and, via the collet (3), radially inwards upon the tool arrangement (8).

2. Tool-chucking system according to Claim 1, in which the centrifugal elements are rotationally symmetrically arranged balls (4).

3. Tool-chucking system according to Claim 1 or 2, in which the spring body (2) has clearances which support the centrifugal elements (4) in the circumferential direction.

4. Tool-chucking system according to one of Claims 1 to 3, in which an elastic body (6), which supports the centrifugal elements (4) radially inwards, is arranged in the spring body (2).

5. Tool-chucking system according to one of Claims 1 to 4, in which the collet (3) is screwed to the spring body (2) in order to provide axial coupling.

6. Tool-chucking system according to one of Claims 1 to 5, in which a thrust piece (5) is coupled axially to the spring body (2) and bears with a thrust face (12) in each case against an end of the centrifugal elements (4) which is opposite to a corresponding slope (11).

7. Tool-chucking system according to Claim 6, in which the thrust face (12) is sloped so that the radially outer end of the thrust face (12) is inclined towards the corresponding slope (11).

8. Tool-chucking system according to one of Claims 1 to 7, in which a changing device (10) is provided, which makes it possible to exert a pressure upon the spring body (2) or upon the thrust piece (5) axially in the direction of the tool arrangement (8).

9. Tool-chucking system according to one of Claims 1 to 8, in which the spring body (2) has grooves proceeding in the circumferential direction, in order to provide a spring portion (14).

10. Tool-chucking system according to one of Claims 1 to 9, in which the collet (3) is slotted axially, in order to provide an elasticity of the collet (3) in the radial direction.

11. Tool-chucking system according to one of the preceding claims, in which the inner cone (7) is formed in one piece with the spindle shaft (1) and the slopes (11) are formed on an insert (15) connected fixedly to the spindle shaft (1).

12. Tool-chucking system according to one of Claims 1 to 10, in which the inner cone (7) is connected fixedly to the spindle shaft (1) and the slopes (11) are formed directly in the spindle shaft (1), for example by means of drillings or millings.

13. Tool-chucking system according to Claim 11, in which a corresponding slope (11) is designed as a drilled hole in the insert (15), a diameter of the drilled hole corresponding at least to a respective diameter of the balls (4), so that, together with the clearances (13), an anti-twist facility is provided for the spring body (2).

## Revendications

1. Système de serrage d'outil pour le serrage d'un agencement d'outil (8) dans un arbre de broche (1), avec
- un cône intérieur (7),
- un corps de ressort (2), qui est appuyé axialement,
- une pince de serrage (3) appliquée par une extrémité évasée en cône sur le cône intérieur (7) et couplée axialement au corps de ressort (2),
dans lequel le corps de ressort (2) présente une section de ressort (14) pouvant être précontrainte agissant axialement, pour fournir une force de précontrainte agissant radialement vers l'intérieur sur l'agencement d'outil au moyen de la pince de serrage (3), **caractérisé par**:
- plusieurs éléments centrifuges (4), qui sont à chaque fois montés sur une rampe correspondante (11) de telle manière qu'une force agissant radialement vers l'extérieur sur les éléments centrifuges (4) en raison d'une rotation de l'arbre de broche (1) agisse axialement sur le corps de ressort (2) et radialement vers l'intérieur sur l'agencement d'outil (8) au moyen de la pince de serrage (3).

2. Système de serrage d'outil selon la revendication 1, dans lequel les éléments centrifuges sont des billes (4) disposées avec la symétrie de rotation.

3. Système de serrage d'outil selon la revendication 1 ou 2, dans lequel le corps de ressort (2) présente des découpes, qui supportent les éléments centrifuges (4) dans la direction périphérique.

4. Système de serrage d'outil selon l'une quelconque des revendications 1 à 3, dans lequel un corps élastique (6) est disposé dans le corps de ressort (2) et soutient les éléments centrifuges (4) radialement vers l'intérieur.

5. Système de serrage d'outil selon l'une quelconque des revendications 1 à 4, dans lequel la pince de serrage (3) est vissée sur le corps de ressort (2), afin de réaliser un couplage axial.

6. Système de serrage d'outil selon l'une quelconque des revendications 1 à 5, dans lequel une pièce de pression (5) est couplée axialement avec le corps de ressort (2), et est appliquée par une face de pression (12) chaque fois sur une extrémité des éléments centrifuges (4) opposée à une rampe correspondante (11).

7. Système de serrage d'outil selon la revendication 6, dans lequel la face de pression (12) est inclinée de telle manière que l'extrémité radialement extérieure de la face de pression (12) soit inclinée vers la rampe correspondante (11).

8. Système de serrage d'outil selon l'une quelconque des revendications 1 à 7, dans lequel on procure un dispositif d'échange (10), qui permet d'exercer une pression sur le corps de ressort (2) ou sur la pièce de pression (5) axialement en direction de l'agencement d'outil (8).

9. Système de serrage d'outil selon l'une quelconque des revendications 1 à 8, dans lequel le corps de ressort (2) présente des rainures s'étendant en direction périphérique pour procurer une section de ressort (14).

10. Système de serrage d'outil selon l'une quelconque des revendications 1 à 9, dans lequel la pince de serrage (3) est fendue axialement pour procurer une élasticité de la pince de serrage (3) en direction radiale.

11. Système de serrage d'outil selon l'une quelconque des revendications précédentes, dans lequel le cône intérieur (7) est réalisé d'une seule pièce avec l'arbre de broche (1) et les rampes (11) sont réalisées sur une pièce rapportée (15) assemblée solidairement à l'arbre de broche (1).

12. Système de serrage d'outil selon l'une quelconque des revendications 1 à 10, dans lequel le cône intérieur (7) est assemblé solidairement à l'arbre de broche (1) et les rampes (11) sont réalisées directement dans l'arbre de broche (1), par exemple par des alésages ou des fraisages.

13. Système de serrage d'outil selon la revendication 11, dans lequel une rampe correspondante (11) est réalisée sous forme d'alésage dans la pièce rapportée (15), dans lequel un diamètre de l'alésage correspond au moins à un diamètre respectif des billes (4), de façon à procurer avec les découpes (13) une protection contre la rotation pour le corps de ressort (2).
